# EUROPEAN PATENT APPLICATION

(11) **EP 2 827 260 A1**
(43) Date of publication of application: **21.01.2015**
(21) Application number: 13306017.8
(22) Date of filing: 16.07.2013
(51) Int. Cl.: G06F 17/30

(54) **Apparatus and method enabling interactive searches**

(71) Applicant: Thomson Licensing, 92130 Issy-les-Moulineaux (FR)
(72) Inventor: Eluard, Marc, 35576 Cesson-Sévigné (FR); Maetz, Yves, 35576 Cesson-Sévigné (FR); Heen, Olivier, 35576 Cesson-Sévigné (FR)
(74) Representative: Huchet, Anne

(57) **Abstract**

A search server (220) receives a search query comprising at least one keyword from a device (210), performs (S12) a search and generates (S13) a response that is returned to the device (210). The response comprises the number of hits found in the search and, for each keyword, an indication of the number of hits a subsequent search excluding the keyword would return. In a preferred embodiment, the response also comprises a number of additional keywords and indications on the number of hits a subsequent search including the additional keywords would return. The response is displayed (S14) to a user, the indications can be given as a number or as graphical modifications - e.g. size or colour - to each keyword. The user can then use the information in the response to refine the request by removing or adding a keyword.

## Description

### TECHNICAL FIELD

The present invention relates generally to computer systems and in particular to the processing of searches in such systems.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Search engines are ubiquitous: search engines can be incorporated in web browsers, there are specific search engine web sites, and many websites of other kinds integrate a search engine to help users find the needed data.

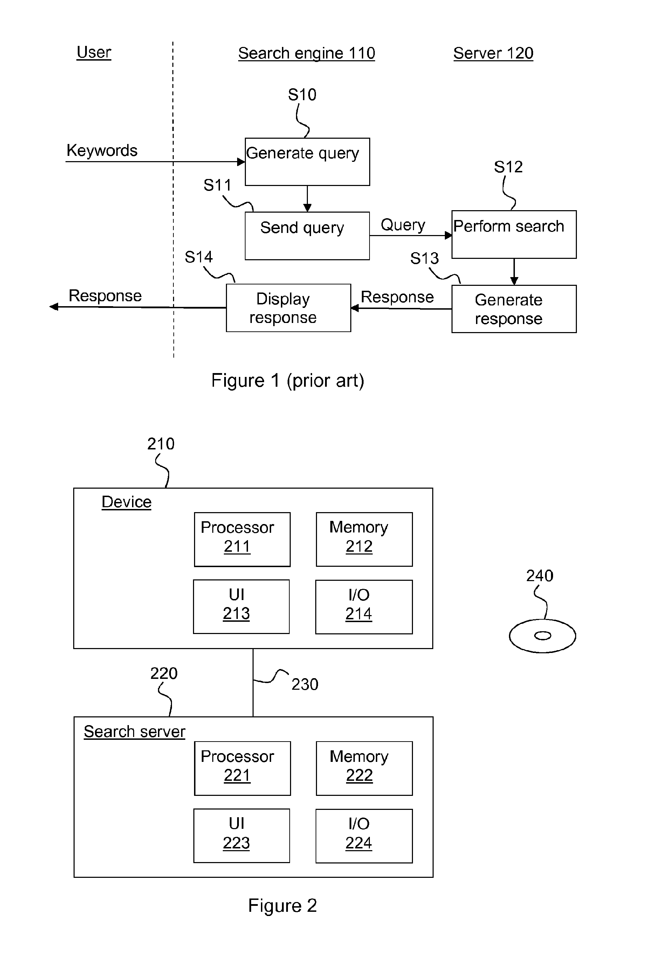

Figure 1 illustrates a prior art search method. When using a search engine 110 to search for data, the user generally inputs a request comprising a number of keywords. The search engine generates S10 a query from the request and sends S11 it to a server 120 that performs S12 a corresponding search and generates S13 a response that is returned to the search engine 110 for display S14 to the user. The response typically includes the total number of "hits", sample text from a number of hits and the links to the hits. Taking as an example the Google search engine, the user enters a request comprising one or a plurality of keywords, launches the search, and navigates in the list of results provided by the server.

In numerous cases, the list is huge and the user can be lost in the amount of results - as an example, a search for "Napoléon Bonaparte" returns around 9,840,000 hits. In other cases, the list is very short or even empty and it may well be that the user is not satisfied and has to formulate another request - for example a search for "Triathlon Guérnica" returns a single hit.

In order to propose relevant results, search engines often sort documents using a numerical statistic called Tf-idf (term frequency-inverse document frequency) that reflects the importance of a word in a document. The Tf-idf value is proportional to the frequency in the document and inversely proportional to the frequency in a corpus (or other reference collection); in other words, a word that is common in the document is given a lower weight if it is a very common word in general. It thus follows that a word that is common in a document, but not in the corpus can be assumed to be important to the document. Naturally, the Tf-idf is different for different languages; the word 'the' is very common indeed in English, but inexistent in French (unless written as 'thé' in which case it is uncommon).

Using the Tf-idf or similar ratings, it is possible to obtain an estimated ranking of the documents that are believed to be the most relevant to a query.

As an example one may imagine a search for the query "the big apple" in documents in English. An intuitive first step is the elimination of any document that does not comprise the three keywords. In case the result comprises many documents, it is possible to add the Tf-idf of each of the keywords in the query - just adding the so-called frequency of each keyword to obtain a metric is not a reliable way to proceed since the word "the" is so common. It follows that the keyword "the" is not a useful keyword as the search result is likely to be the same whether it is included in the query or not. However, even the more useful keywords "big" and "apple" may not be sufficient to find the relevant documents: is the query related to New York or to apples that are bigger than other apples?

Thus, when searching for data, the user builds a query that is often composed of keywords and the system returns data that matches this query. In an "open" or "free" operating mode, like those provided by Google or Bing™, the user can enter any keyword without limitation. In "closed" operating modes such as for example online travel booking, the user is often guided through the use of drop-down menus or check boxes and there are only a limited number of pre-defined keywords to choose between. In both cases, the user is unable to measure the relevance of his request without analyzing the answers. When the results are not satisfactory, the user may have to repeat the process from the beginning, possibly by modifying the previous query by adding or removing keywords. However, even using systems like Google that provides an auto-completion feature to suggest common keywords or expressions that begin with the letters entered by the user, the user receives little or no help in improving the query. This is owing to the fact that the user is essentially blind to how the new keywords affect the result of the query.

The problem to solve is to provide technical assistance in the writing of a search query and the iterative correction of this query to improve the results.

It can therefore be appreciated that there is a need for a solution that can provide an improved search solution that helps users develop searches. The present invention provides such a solution.

### SUMMARY OF INVENTION

In a first aspect, the invention is directed to an apparatus for generating search queries. The apparatus comprises an interface configured to send queries based on keywords to a search server and to receive corresponding search responses from the search server, each response comprising a number indicative of how many hits the search server found for the search query, and for each individual keyword in the search query an indication of the number of hits a subsequent search query based on the keywords of the search query minus the individual keyword would return; and a processor configured to: receive the search responses from the interface; display the search responses on a user interface, wherein the display of a search response comprises the number indicative of how many hits the search server found for the search query, and for each individual keyword in the search query the indication of the number of hits a subsequent search query based on the keywords of the search query minus the individual keyword would return; receive user input to remove a keyword from the search query to generate a subsequent search query; and send the subsequent search query to the search server.

In a first embodiment, each search response further comprises at least one additional keyword not included in the corresponding search query and an indication of the number of hits a subsequent search query based on the keywords of the search query plus the additional keyword would return, and the processor is further configured to display the at least one additional keyword not included in the corresponding search query and the indication of the number of hits the subsequent search query based on the keywords of the search query plus the additional keyword would return.

In a second embodiment, the search response further comprises information about at least one hit corresponding to the search query. It is advantageous that the information comprises a link to the hit.

In a second aspect, the invention is directed to a method for generating search queries. An apparatus displays a first search response corresponding to a first search query, the first search response being received from a search server and comprising a number indicative of how many hits the search server found for the first search query, and for each individual keyword in the first search query an indication of the number of hits a subsequent search query based on the keywords of the first search query minus the individual keyword would return; receives user input to modify the first search query to generate a subsequent search query; and sends the subsequent search query to the search server.

In a first embodiment, the user input is an instruction to remove a keyword from the first search query.

In a second embodiment, the first search response further comprises at least one additional keyword not included in the first search query and an indication of the number of hits a subsequent search query based on the keywords of the first search query plus the additional keyword would return, and wherein the step of displaying further comprises displaying the at least one additional keyword not included in the corresponding search query and the indication of the number of hits the subsequent search query based on the keywords of the first search query plus the additional keyword would return. It is advantageous that the user input is an instruction to add an additional keyword of the at least one additional keyword to the first search query.

In a third aspect, the invention is directed to a search server comprising: an interface configured to receive search queries comprising at least one keyword and to return search responses; and a processor configured to, in response to reception of a search query: perform a search for the at least one keyword of the search query; calculate the number of hits returned by the search; for each keyword, calculate the number of hits a subsequent search excluding the keyword would return; and generate the search response comprising the number of hits and, for each keyword, the number of hits a subsequent search excluding the keyword would return.

In a first embodiment, the processor is further configured to: obtain at least one additional keyword not included in the search query; calculate the number of hits a subsequent search based on the keywords of the search query plus the additional keyword would return; and include in the search response, for each additional keyword, the additional keyword and the number of hits a subsequent search based on the keywords of the search query plus the additional keyword would return.

In a fourth aspect, the invention is directed to a method for performing a search at a search server comprising the steps of: receiving a search queries comprising at least one keyword; performing a search for the at least one keyword of the search query; calculating the number of hits returned by the search; for each keyword, calculating the number of hits a subsequent search excluding the keyword would return; and generating the search response comprising the number of hits and, for each keyword, the number of hits a subsequent search excluding the keyword would return.

In a first embodiment, the method further comprises the steps of: obtaining at least one additional keyword not included in the search query; calculating the number of hits a subsequent search based on the keywords of the search query plus the additional keyword would return; and including in the search response, for each additional keyword, the additional keyword and the number of hits a subsequent search based on the keywords of the search query plus the additional keyword would return.

### BRIEF DESCRIPTION OF DRAWINGS

Preferred features of the present invention will now be described, by way of non-limiting example, with reference to the accompanying drawings, in which
Figure 1 illustrates a prior art search method using a search engine and a server;
Figure 2 illustrates a system according to a preferred embodiment of the present invention; and
Figure 3 illustrates a search method according to a preferred embodiment of the present invention; and
Figures 4A-4F (that may be jointly referred to as Figure 4) illustrate an example of a search using a preferred embodiment of the present invention.

### DESCRIPTION OF EMBODIMENTS

Figure 2 illustrates a preferred embodiment of a system according to the present invention. The system comprises a device 210 and a search server (hereinafter "server") 220. The device 210 and the server 220 can be any kind of suitable computer or device capable of performing calculations, such as a standard Personal Computer (PC) or workstation. The device 210 and the server 220 each preferably comprise at least one processor 211, 221, memory 212, 222, a (possibly external) user interface 213, 223 for interacting with a user, and a second interface 214, 224 for interaction with other devices (such as each other) over connection 230. The device 210 also preferably comprises an interface for reading a software program from a digital data support 240 that stores instructions that, when executed by the processor 211, performs any of the search methods described hereinafter. The skilled person will appreciate that the illustrated devices are very simplified for reasons of clarity and that real devices in addition would comprise features such as persistent storage.

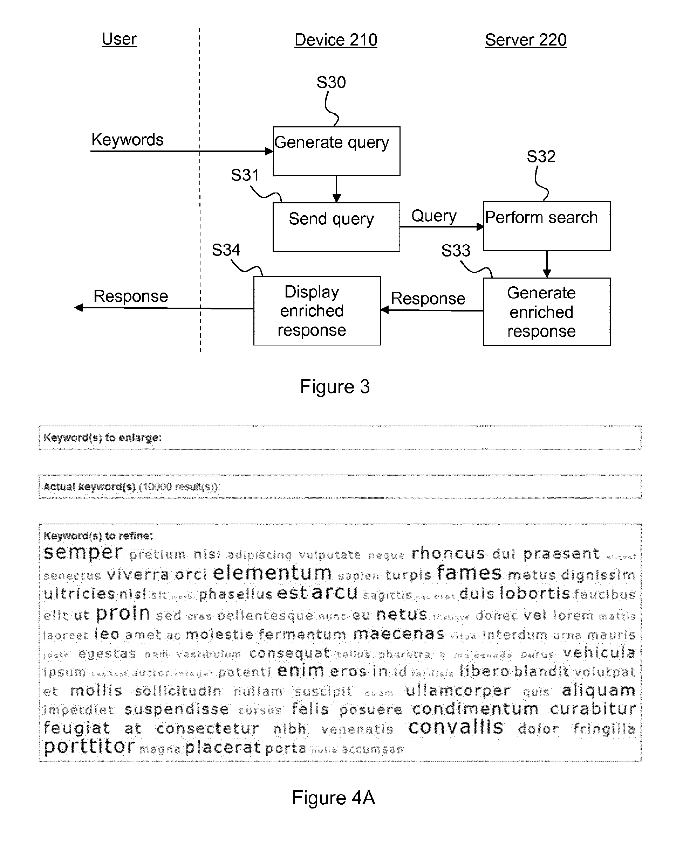

Figure 3 illustrates a search method according to a preferred embodiment of the present invention. The user provides a request comprising at least one keyword to the device 210 that generates S30 and sends S31 a query to the server 220. If the search is new, then this may be done as in the method described in Figure 1. It will be appreciated that the word 'keyword' in a preferred embodiment is a word (i.e. a sequence of letters), but that it also can be practically any kind of search item such as for example an image, a video, a sound (or sequence of sounds).

The server 220 receives the query and performs S32 a search based on the request. The search is performed in a search domain such as on the Internet or in a database. The server 220 then uses the results of the search to generate S33 an enriched (compared to the prior art) response. As in Figure 1, the response comprises the number of hits NB, the links to some or all of the hits and preferably some kind of description of these hits, such as a title and/or sample text. According to the invention, the generated response also comprises information on the effect that removal of a keyword would have on the number of hits. The response preferably also comprises a number of keywords that are believed to have some relevance to the request - exactly how this is determined is well known to the skilled person, see for example CA 2571172, and will not be discussed herein - and the effect that addition of each of these keywords would have on the number of hits. It will be appreciated that it is easy for the server 220 to determine the effect of removal or addition of a keyword, since all it has to do is run a search for an advantageously limited number of queries in which a keyword has been removed or added.

The server 220 then sends the enriched response to the device 210 that displays the enriched response to the user. The skilled person will appreciate that since the response comprises more information than the response in Figure 1, it is displayed in a different manner, which could be close to that of the prior art.

It is preferred that the device 210 displays the request in a manner that allows easy modification thereof. The device also displays the number of hits and information on each of at least some of the hits; this may be done as in the prior art solutions. The device also displays the "weight" of each keyword in the request, i.e. the effect removal of the keyword would have on the number of hits. This can be given as a number, graphically (using colours or font sizes to indicate importance), or a combination thereof.

It will be appreciated that the response in a preferred embodiment comprises information about at least some of the hits. However, it is also possible for the responses to comprise only information about the number of hits and the information about the keywords until the user is satisfied with the number and requests to receive the information about the hits.

The information provided by the method can enable a user to iteratively generate more pertinent requests. For example, when it is indicated that the effect of a keyword that was used in the request is low - e.g. if the keyword is a common word like "the" or if the keywords are very closely linked like "da", "Vinci", "Mona" and "Lisa" - the user can easily remove a keyword by simply removing it from the request. Likewise, if the user feels that the response returned too few hits, then the user can be helped in deciding which keyword to remove in order to broaden the search in a judicious manner.

When it comes to narrowing a search, apart from manually adding keywords (chosen among those provided or not) to the request, the device 210 advantageously enables the user to click on an additional keyword to add it to the request.

Thus, using the invention, the user can iteratively refine the request by adding or removing keywords and in advance know the effect of the number of hits returned by the following request (unless the user manually adds a keyword that was not provided by the server 220).

In brief, to a query, the server 220 generates a response that comprises:
- The number of hits NB for the request.
- For each keyword in the request: the number of hits that would be returned in response to a new request corresponding to the present request without the keyword in question.
- A list comprising at least some of the hits, preferably with links to the hits.
- A number of keywords and the number of hits that would be returned in response to a new request that adds the keyword in question to the present request.

The device 210 displays this information to the user and preferably also the request so that the user can easily add and remove keywords while being informed in advance of the effect on the number of hits that will be returned.

While the invention has been described as iterating the searches by adding or removing one keyword at a time, it will be appreciated that the invention can also be generalised to support addition or removal of a plurality of keywords.

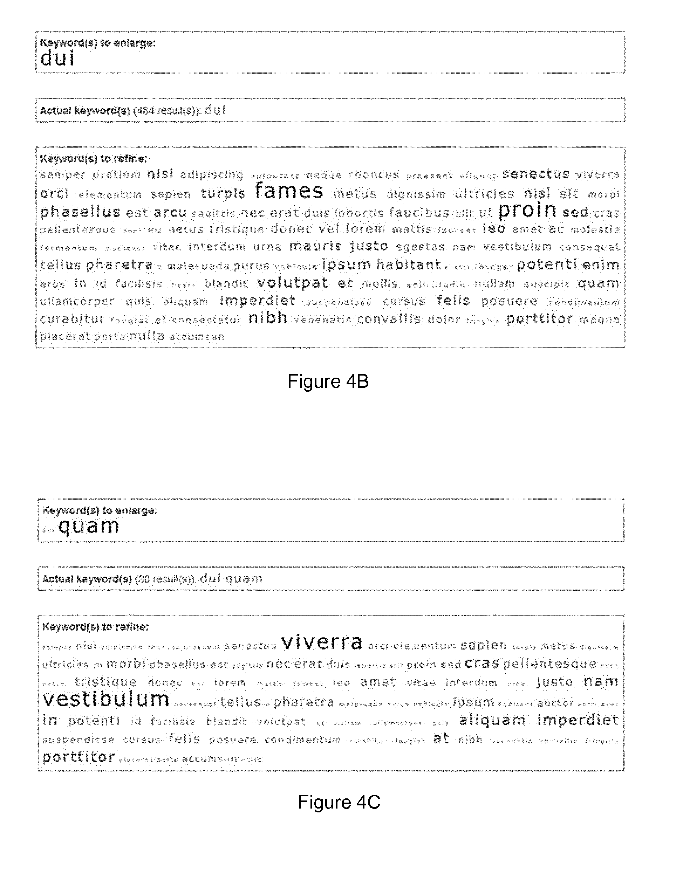

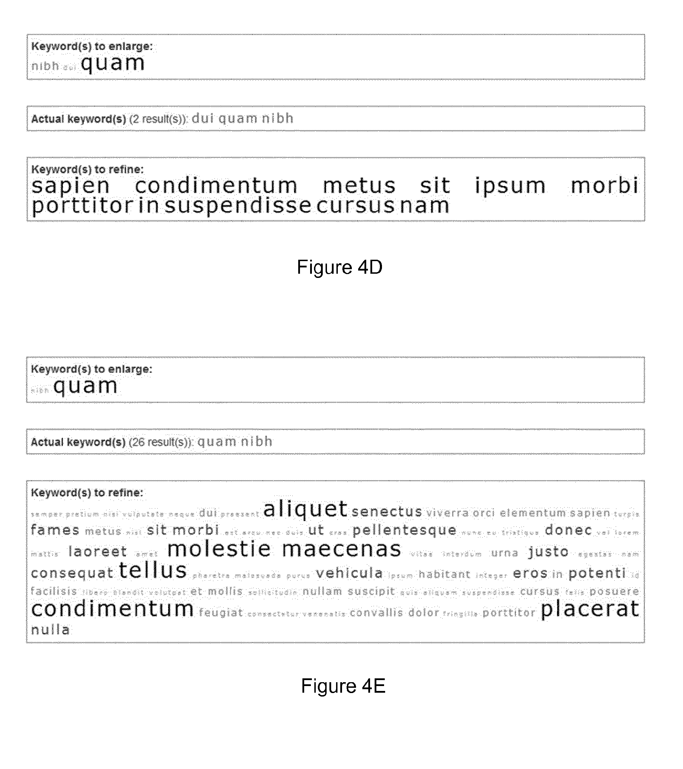

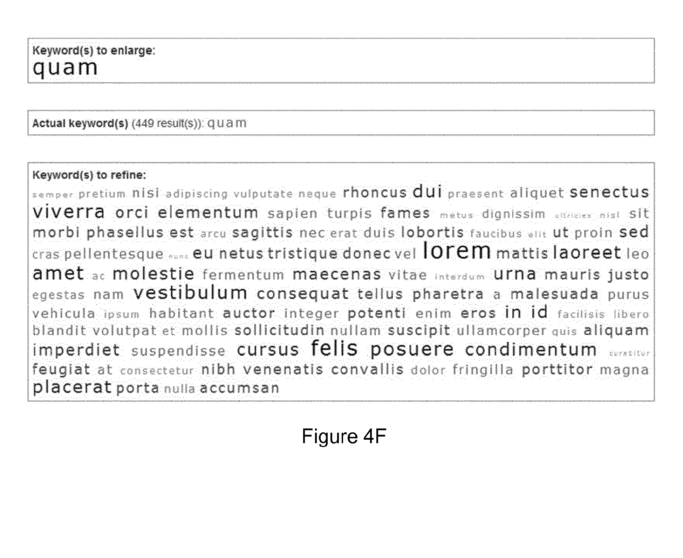

An example will now illustrate the invention. The example is partly illustrated in the description hereinafter and partly in Figures 4A-4F (that may be referred to as Figure 4). The example is generated using a database with 10000 entries, 111 different keywords, and a maximum of 10 keywords per entry.

The following is an illustration of the situation before any request is input:
REQUEST - Current request weight for //: 10000
ENLARGE, 0 keyword(s) -> (Min: N/A - Max: N/A)
REFINE, 111 keyword(s) -> (Min: 437 - Max: 523)
   - semper- => 516 -pretium- => 479 -nisi- => 484 -adipiscing- => 464 -vulputate- => 470 -neque- => 457 -rhoncus- => 498 -dui- => 484 -praesent- => 490 -aliquet- => 444 - senectus- => 471 -viverra- => 491 -orci- => 494 -elementum- => 520 -sapien- => 465 - turpis- => 487 -fames- => 516 -metus- => 487 -dignissim- => 482 -ultricies- => 497 - nisl- => 482 -sit- => 470 -morbi- => 440 -phasellus- => 485 -est- => 514 -arcu- => 518 -sagittis- => 467 -nec- => 437 -erat- => 452 -duis- => 494 -lobortis- => 503 -faucibus-=> 472 -elit- => 472 -ut- => 484 -proin- => 518 -sed- => 474 -cras- => 456 - pellentesque- => 480 -nunc- => 458 -eu- => 487 -netus- => 500 -tristique- => 444 - donee- => 474 -vel- => 485 -lorem- => 472 -mattis- => 459 -laoreet- => 467 -leo- => 495 -amet- => 480 -ac- => 471 -molestie- => 489 -fermentum- => 487 -maecenas- => 499 -vitae- => 454 -interdum- => 474 -uma- => 464 -mauris- => 478 -justo- => 454 - egestas- => 479 -nam- => 461 -vestibulum- => 459 -consequat- => 487 -tellus- => 457 -pharetra- => 459 -a- => 463 -malesuada- => 449 -purus- => 461 -vehicula- => 495 - ipsum- => 476 -habitant- => 442 -auctor- => 462 -integer- => 450 -potenti- => 476 - enim- => 512 -eros- => 497 -in- => 493 -id- => 477 -facilisis- => 452 -libero- => 496 - blandit- => 488 -volutpat- => 473 -et- => 474 -mollis- => 496 -sollicitudin- => 488 - nullam- => 476 -suscipit- => 475 -quam- => 449 -ullamcorper- => 491 -quis- => 465 - aliquam- => 503 -imperdiet- => 474 -suspendisse- => 494 -cursus- => 471 -felis- => 492 -posuere- => 485 -condimentum- => 505 -curabitur- => 502 -feugiat- => 504 -at-=> 495 -consectetur- => 496 -nibh- => 487 -venenatis- => 475 -convallis- => 523 - dolor- => 482 -fringilla- => 484 -porttitor- => 516 -magna- => 464 -placerat- => 501 - porta- => 484 -nulla- => 452 -accumsan- => 466

As can be seen, no request exists, and the search cannot be broadened ("ENLARGE") as there are no existing keywords, but it can be narrowed ("REFINE") by adding one of the 111 possible keywords to the request. It is indicated that addition of one keyword would return at most 523 hits and at least 437 hits. Then the number of hits returned by a query comprising each keyword is given, e.g. "semper" would return 516 hits.

Figure 4A illustrates the situation as it could be shown in the user interface 213. The box on top shows the effect of removal of keywords (not applicable as no keywords have been input), the middle box shows the number of hits and the keywords of the most recent search (showing 10000 hits, i.e. every possible hit), and the lowest box shows the keywords that can be used to refine the search. It is intended that the relative size of a keyword is correlated to the number of hits that would be returned from a search in which the keyword is added.

Assuming that the user decides to use the keyword "dui", the request returns the following result:
REQUEST - Current request weight for /dui/: 484
ENLARGE, 1 keyword(s) -> (Min: 10000 - Max: 10000)
-dui- => 10000
REFINE, 110 keyword(s) -> (Min: 15 - Max: 44)
-semper- => 26 -pretium- => 25 -nisi- => 30 -adipiscing- => 25 -vulputate- => 20 - neque- => 23 -rhoncus- => 26 -praesent- => 19 -aliquet- => 18 -senectus- => 30 - viverra- => 26 -orci- => 30 -elementum- => 22 -sapien- => 25 -turpis- => 32 -fames-=> 44 -metus- => 28 -dignissim- => 25 -ultricies- => 29 -nisl- => 31 -sit- => 27 -morbi-=> 22 -phasellus- => 34 -est- => 27 -arcu- => 32 -sagittis- => 23 -nec- => 28 -erat- => 27 -duis- => 24 -lobortis- => 25 -faucibus- => 27 -elit- => 23 -ut- => 27 -proin- => 44 - sed- => 30 -eras- => 25 -pellentesque- => 22 -nunc- => 17 -eu- => 22 -netus- => 26 - tristique- => 25 -donec- => 29 -vel- => 27 -lorem- => 27 -mattis- => 26 -laoreet- => 19 -leo- => 30 -amet- => 24 -ac- => 29 -molestie- => 23 -fermentum- => 18 -maecenas-=> 15 -vitae- => 23 -interdum- => 26 -uma- => 24 -mauris- => 30 -justo- => 31 - egestas- => 25 -nam- => 22 -vestibulum- => 26 -consequat- => 22 -tellus- => 27 - pharetra- => 30 -a- => 20 -malesuada- => 21 -purus- => 26 -vehicula- => 18 -ipsum- => 35 -habitant- => 32 -auctor- => 17 -integer- => 19 -potenti- => 35 -enim- => 32 -eros-=> 21 -in- => 27 -id- => 24 -facilisis- => 26 -libero- => 16 -blandit- => 26 -volutpat-=> 34 -et- => 31 -mollis- => 26 -sollicitudin- => 20 -nullam- => 26 -suscipit- => 21 - quam- => 30 -ullamcorper- => 25 -quis- => 24 -aliquam- => 22 -imperdiet- => 31 - suspendisse- => 19 -cursus- => 24 -felis- => 31 -posuere- => 27 -condimentum- => 19 - curabitur- => 28 -feugiat- => 19 -at- => 22 -consectetur- => 21 -nibh- => 36 -venenatis-=> 22 -convallis- => 29 -dolor- => 25 -fringilla- => 17 -porttitor- => 30 -magna- => 26 -placerat- => 26 -porta- => 23 -nulla- => 27 -accumsan- => 23

It is indicated that the request weight, i.e. the number of hits returned, for "dui" is 484. The only way to broaden the request is by removing "dui", which would lead to an empty request for which a search would return all of the 10000 entries. It is also indicated that it is possible to use any one of 110 keywords to narrow the search further, leading to a minimum of 15 hits and a maximum of 44 hits. Finally, each possible additional keyword is provided with information on the number of hits such a search would return, e.g. a search for "dui" and "semper" would return 26 hits.

Figure 4B illustrates the corresponding user interface.

Assuming now that the user has added the keyword "quam" to the request, the search returns the following result:
REQUEST - Current request weight for /dui quam/: 30
ENLARGE, 2 keyword(s) -> (Min: 449 - Max: 484)
-dui- => 449 -quam- => 484
REFINE, 85 keyword(s) -> (Min: 1 - Max: 5)
-semper- => 1 -nisi- => 2 -adipiscing- => 1 -rhoncus- => 1 -praesent- => 1 -senectus-=> 2 -viverra- => 5 -orci- => 2 -elementum- => 2 -sapien- => 3 -turpis- => 1 -metus-=> 2 -dignissim- => 1 -ultricies- => 2 -sit- => 1 -morbi- => 3 -phasellus- => 2 -est- => 2 -sagittis- => 1 -nec- => 3 -erat- => 3 -duis- => 2 -lobortis- => 1 -elit- => 1 -proin- => 2 -sed- => 2 -cras- => 4 -pellentesque- => 3 -nunc- => 1 -netus- => 1 -tristique- => 3 - donee- => 2 -vel- => 1 -lorem- => 2 -mattis- => 1 -laoreet- => 1 -leo- => 2 -amet- => 3 -vitae- => 2 -interdum- => 2 -uma- => 1 -justo- => 3 -nam- => 4 -vestibulum- => 5 - consequat- => 1 -tellus- => 3 -a- => 1 -pharetra- => 3 -malesuada- => 1 -purus- => 1 - vehicula- => 1 -ipsum- => 3 -habitant- => 1 -auctor- => 2 -enim- => 1 -eros- => 1 -in-=> 4 -potenti- => 3 -id- => 2 -facilisis- => 2 -blandit- => 2 -volutpat- => 2 -et- => 1 - nullam- => 1 -ullamcorper- => 1 -quis- => 1 -aliquam- => 4 -imperdiet- => 4 - suspendisse- => 2 -cursus- => 2 -felis- => 3 -posuere- => 2 -condimentum- => 2 - curabitur- => 1 -feugiat- => 1 -at- => 4 -nibh- => 2 -venenatis- => 1 -convallis- => 1 - fringilla- => 1 -porttitor- => 4 -placerat- => 1 -porta- => 1 -accumsan- => 2 -nulla- => 1

It is indicated that the request weight, i.e. the number of hits returned, for "dui" AND "quam" is 30. The request can be broadened to return a minimum of 449 hits and a maximum of 484 hits; removing "dui" would return 449 hits and "quam" 484. It is also indicated that it is possible to use 85 different keywords (as it would appear that 24 keywords are not part of the entries that comprise "dui" and "quam") to narrow the search further, leading to a minimum of 1 hit and a maximum of 5 hits. Finally, each possible additional keyword is provided with information on the number of hits such a search would return, e.g. a search for "dui", "quam" and "semper" would return 1 hit.

Figure 4C illustrates the corresponding user interface. For example, the word 'quam' is shown much bigger than 'dui' to indicate that removal of 'quam' (i.e. 'dui' only) corresponds to 484 hits, while just 'quam' would return 449 hits.

Assuming now that the user has added the keyword "nibh" to the request, the search returns the following result (without detailed explanation):
REQUEST - Current request weight for /dui quam nibh/: 2
ENLARGE, 3 keyword(s) -> (Min: 26 - Max: 36)
-nibh- => 30 -dui- => 26 -quam- => 36
REFINE, 11 keyword(s) -> (Min: 1 - Max: 1)
-sapien- => 1 -condimentum- => 1 -metus- => 1 -sit- => 1 -ipsum- => 1 -morbi- => 1 - porttitor- => 1 -in- => 1 -suspendisse- => 1 -cursus- => 1 -nam- => 1

Figure 4D illustrates the corresponding user interface. Since every keyword that could be used to refine the search would result in one hit, they are all shown equally large.

Assuming now that the user has decided to broaden the search by removing the keyword "dui" from the request, the search returns the following result also illustrated in Figure 4E (without detailed explanation):
REQUEST - Current request weight for /quam nibh/: 26
ENLARGE, 2 keyword(s) -> (Min: 449 - Max: 487)
-nibh- => 449 -quam- => 487
REFINE, 81 keyword(s) -> (Min: 1 - Max: 4) -semper- => 1 -pretium- => 1 -nisi- => 1 -vulputate- => 1 -neque- => 1 -dui- => 2 - praesent- => 1 -aliquet- => 4 -senectus- => 3 -viverra- => 2 -orci- => 2 -elementum- => 2 -sapien- => 2 -turpis- => 1 -fames- => 3 -metus- => 2 -nisl- => 1 -sit- => 3 -morbi-=> 3 -est- => 1 -arcu- => 1 -nec- => 1 -duis- => 1 -ut- => 3 -eras- => 1 -pellentesque-=> 3 -nunc- => 1 -eu- => 1 -tristique- => 1 -donec- => 3 -vel- => 1 -lorem- => 1 - mattis- => 1 -laoreet- => 3 -amet- => 1 -molestie- => 4 -maecenas- => 4 -vitae- => 1 - interdum- => 1 -uma- => 2 -justo- => 3 -egestas- => 1 -nam- => 1 -consequat- => 3 - tellus- => 4 -pharetra- => 1 -malesuada- => 1 -purus- => 1 -vehicula- => 3 -ipsum- => 1 -habitant- => 2 -integer- => 1 -eros- => 3 -in- => 2 -potenti- => 3 -id- => 1 -facilisis- => 2 -libero- => 1 -blandit- => 1 -volutpat- => 1 -et- => 2 -mollis- => 2 -sollicitudin- => 1 -nullam- => 2 -suscipit- => 2 -quis- => 1 -aliquam- => 1 -suspendisse- => 1 -cursus- => 2 -felis- => 1 -posuere- => 2 -condimentum- => 4 -feugiat- => 2 -consectetur- => 1 - venenatis- => 1 -convallis- => 2 -dolor- => 2 -fringilla- => 1 -porttitor- => 2 -placerat-=> 4 -nulla- => 3

Assuming finally that the user has decided to broaden the search further by removing also the keyword "nibh" from the request, the search returns the following result also illustrated in Figure 4F (without detailed explanation):
REQUEST - Current request weight for /quam/: 449
ENLARGE, 1 keyword(s) -> (Min: 10000 - Max: 10000)
-quam- => 10000
REFINE, 110 keyword(s) -> (Min: 11 - Max: 37)
-semper- => 16 -pretium- => 17 -nisi- => 24 -adipiscing- => 17 -vulputate- => 18 - neque- => 19 -rhoncus- => 25 -dui- => 30 -praesent- => 19 -aliquet- => 23 -senectus-=> 29 -viverra- => 33 -orci- => 29 -elementum- => 28 -sapien- => 23 -turpis- => 24 - fames- => 25 -metus- => 16 -dignissim- => 21 -ultricies- => 11 -nisl- => 16 -sit- => 24 -morbi- => 25 -phasellus- => 27 -est- => 27 -arcu- => 18 -sagittis- => 26 -nec- => 22 - erat- => 21 -duis- => 22 -lobortis- => 25 -faucibus- => 19 -elit- => 16 -ut- => 25 -proin-=> 24 -sed- => 29 -cras- => 21 -pellentesque- => 24 -nunc- => 13 -eu- => 29 -netus- => 27 -tristique- => 25 -donec- => 26 -vel- => 23 -lorem- => 37 -mattis- => 25 -laoreet- => 31 -leo- => 24 -amet- => 33 -ac- => 19 -molestie- => 30 -fermentum- => 22 -maecenas-=> 28 -vitae- => 24 -interdum- => 16 -uma- => 31 -mauris- => 26 -justo- => 27 - egestas- => 20 -nam- => 23 -vestibulum- => 33 -consequat- => 29 -tellus- => 26 - pharetra- => 25 -a- => 23 -malesuada- => 25 -purus- => 24 -vehicula- => 23 -ipsum- => 17 -habitant- => 24 -auctor- => 25 -integer- => 24 -potenti- => 25 -enim- => 22 -eros-=> 25 -in- => 31 -id- => 31 -facilisis- => 18 -libero- => 19 -blandit- => 22 -volutpat-=> 24 -et- => 20 -mollis- => 24 -sollicitudin- => 25 -nullam- => 22 -suscipit- => 26 - ullamcorper- => 23 -quis- => 17 -aliquam- => 26 -imperdiet- => 29 -suspendisse- => 24 -cursus- => 30 -felis- => 36 -posuere- => 33 -condimentum- => 30 -curabitur- => 12 - feugiat- => 26 -at- => 22 -consectetur- => 18 -nibh- => 26 -venenatis- => 27 -convallis-=> 26 -dolor- => 20 -fringilla- => 23 -porttitor- => 25 -magna- => 22 -placerat- => 32 - porta- => 27 -nulla- => 20 -accumsan- => 27

It will be appreciated that the present invention can provide search method and system that enable a user to iteratively modify requests in an advised way.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. An apparatus (210) for generating search queries, the apparatus comprising:
an interface (214) configured to send queries based on keywords to a search server (220) and to receive corresponding search responses from the search server (220), each response comprising a number indicative of how many hits the search server found for the search query, and for each individual keyword in the search query an indication of the number of hits a subsequent search query based on the keywords of the search query minus the individual keyword would return; and
a processor (211) configured to:
- receive the search responses from the interface (214);
- display the search responses on a user interface (213), wherein the display of a search response comprises the number indicative of how many hits the search server found for the search query, and for each individual keyword in the search query the indication of the number of hits a subsequent search query based on the keywords of the search query minus the individual keyword would return;
- receive user input to remove a keyword from the search query to generate a subsequent search query; and
- send the subsequent search query to the search server (220).

2. The apparatus of claim 1, wherein each search response further comprises at least one additional keyword not included in the corresponding search query and an indication of the number of hits a subsequent search query based on the keywords of the search query plus the additional keyword would return, and wherein the processor (211) is further configured to display the at least one additional keyword not included in the corresponding search query and the indication of the number of hits the subsequent search query based on the keywords of the search query plus the additional keyword would return.

3. The apparatus of claim 1, wherein the search response further comprises information about at least one hit corresponding to the search query.

4. The apparatus of claim 3, wherein the information comprises a link to the hit.

5. A method for generating search queries, the method comprising the steps at an apparatus (210) of:
- displaying a first search response corresponding to a first search query, the first search response being received from a search server (220) and comprising a number indicative of how many hits the search server found for the first search query, and for each individual keyword in the first search query an indication of the number of hits a subsequent search query based on the keywords of the first search query minus the individual keyword would return;
- receiving user input to modify the first search query to generate (S10) a subsequent search query; and
- sending (S11) the subsequent search query to the search server.

6. The method of claim 5, wherein the user input is an instruction to remove a keyword from the first search query.

7. The method of claim 5, wherein the first search response further comprises at least one additional keyword not included in the first search query and an indication of the number of hits a subsequent search query based on the keywords of the first search query plus the additional keyword would return, and wherein the step of displaying further comprises displaying the at least one additional keyword not included in the corresponding search query and the indication of the number of hits the subsequent search query based on the keywords of the first search query plus the additional keyword would return.

8. The method of claim 7, wherein the user input is an instruction to add an additional keyword of the at least one additional keyword to the first search query.

9. A search server (220) comprising:
an interface (224) configured to receive search queries comprising at least one keyword and to return search responses; and
a processor (221) configured to, in response to reception of a search query:
- perform a search for the at least one keyword of the search query;
- calculate the number of hits returned by the search;
- for each keyword, calculate the number of hits a subsequent search excluding the keyword would return; and
- generate the search response comprising the number of hits and, for each keyword, the number of hits a subsequent search excluding the keyword would return.

10. The search server of claim 9, wherein the processor (221) is further configured to:
- obtain at least one additional keyword not included in the search query;
- calculate the number of hits a subsequent search based on the keywords of the search query plus the additional keyword would return; and
- include in the search response, for each additional keyword, the additional keyword and the number of hits a subsequent search based on the keywords of the search query plus the additional keyword would return.

11. A method for performing a search at a search server (220) comprising the steps of:
- receiving a search queries comprising at least one keyword;
- performing a search for the at least one keyword of the search query;
- calculating the number of hits returned by the search;
- for each keyword, calculating the number of hits a subsequent search excluding the keyword would return; and
- generating the search response comprising the number of hits and, for each keyword, the number of hits a subsequent search excluding the keyword would return.

12. The method of claim 11, further comprising the steps of:
- obtaining at least one additional keyword not included in the search query;
- calculating the number of hits a subsequent search based on the keywords of the search query plus the additional keyword would return; and
- including in the search response, for each additional keyword, the additional keyword and the number of hits a subsequent search based on the keywords of the search query plus the additional keyword would return.
